# EUROPEAN PATENT APPLICATION

(11) **EP 4 707 976 A1**
(43) Date of publication of application: **11.03.2026**
(21) Application number: 23940599.6
(22) Date of filing: 05.06.2023
(51) Int. Cl.: G05B 23/02

(54) **DATA PROCESSING DEVICE, DATA PROCESSING METHOD, AND DATA PROCESSING PROGRAM**

(71) Applicant: MITSUBISHI ELECTRIC CORPORATION, Chiyoda-ku Tokyo 100-8310 (JP)
(72) Inventor: YASUI, Ryota, Tokyo 100-8310 (JP); YAMAUCHI, Takahisa, Tokyo 100-8310 (JP); KIKUZAWA, Takashi, Tokyo 100-8310 (JP); ITO, Hitomi, Tokyo 100-8310 (JP)
(74) Representative: Pfenning, Meinig & Partner mbB
(86) International application number: PCT/JP2023/020870
(87) International publication number: WO 2024/252492

(57) **Abstract**

A collation data generation unit (103) generates collation data to be used for estimating a state of a device in accordance with an installation condition which is a condition to be employed when the device is installed. A sensor data acquisition unit (104) acquires sensor data of a diagnostic target device (200) which is an installed device. A state estimation unit (105) collates the sensor data with the collation data, and estimates a state of the diagnostic target device (200).

## Description

### Technical Field

The present disclosure relates to technology for estimating a state of a device.

### Background Art

Conventionally, in order to diagnose the state of a device, sensor data is acquired from a diagnostic target device which is a device to be diagnosed. Then, the sensor data acquired from the diagnostic target device is collated with sensor data (hereinafter referred to as abnormal data) previously prepared under abnormal situations, and abnormal points and abnormal causes in the diagnostic target device are estimated.

However, depending on the type of the device, the frequency of abnormal occurrences may be infrequent, and it may not be possible to acquire and accumulate the abnormal data.

Further, it is not easy to prepare a plurality of types of abnormal data corresponding to a plurality of types of abnormal causes.

Therefore, in the technology of Patent Literature 1, data that simulates an anomaly is generated by applying hypothetical abnormal conditions to a physical model or a mathematical model (hereinafter both referred to as a model) that has been generated using sensor data (hereinafter referred to as normal data) under normal situations. Then, in the technology of Patent Literature 1, a simulated diagnostic pattern is obtained using the data that simulates the anomaly.

### Citation List

### Patent Literature

Patent Literature 1: JP No. 6856443 B2

### Summary of Invention

### Technical Problem

When a plurality of devices of the same model that are used in different installation environments are diagnosed using the technology of Patent Literature 1, the following two problems are considered.

### (1) The problem of decreased diagnostic accuracy due to differences in installation conditions

The technology of Patent Literature 1 generates the model from the normal data for a certain device (referred to as a device M). The normal data for another device (referred to as a device N) of the same type as the device M may differ from the normal data for the device M due to differences in installation conditions between the device M and the device N. Thus, when the device N is diagnosed using the model generated using the normal data for the device M, there is a possibility that the diagnostic accuracy may decrease.

### (2) Occurrence of redundant processing

As a solution to the problem (1) described above, it is considered to generate the model for each device. However, in the technology of Patent Literature 1, it is necessary to acquire the normal data for each device and to generate the model for each device using the normal data for each device. In such a manner, according to the technology of Patent Literature 1, redundant processing occurs in the acquisition of normal data and the generation of models.

The main purpose of the present disclosure is to solve these problems. More specifically, the present disclosure aims to accurately estimate the state of the device, regardless of the installation conditions under which the device has been installed, without causing the redundant processing.

### Solution to Problem

A data processing apparatus according to the present disclosure includes:
a collation data generation unit to generate collation data to be used for estimating a state of a device in accordance with an installation condition which is a condition to be employed when the device is installed;
a sensor data acquisition unit to acquire sensor data of a diagnostic target device which is an installed device; and
a state estimation unit to collate the sensor data with the collation data, and estimate a state of the diagnostic target device.

### Advantageous Effects of Invention

According to the present disclosure, it is possible to accurately estimate the state of the device, regardless of the installation conditions under which the device has been installed, without causing the redundant processing.

### Brief Description of Drawings

Fig. 1 is a diagram illustrating an example of a functional configuration of a failure diagnostic apparatus according to Embodiment 1.
Fig. 2 is a diagram illustrating an example of tree information according to Embodiment 1.
Fig. 3 is a diagram illustrating an example of collation data in Embodiment 1.
Fig. 4 is a diagram illustrating an example of a collation process according to Embodiment 1.
Fig. 5 is a diagram illustrating an example of the tree information according to Embodiment 1.
Fig. 6 is a flowchart illustrating an example of operation of the failure diagnostic apparatus according to Embodiment 1.
Fig. 7 is a diagram illustrating an example of the tree information according to Embodiment 1.
Fig. 8 is a diagram illustrating an example of the functional configuration of the failure diagnostic apparatus according to Embodiment 2.
Fig. 9 is a flowchart illustrating an example of the operation of the failure diagnostic apparatus according to Embodiment 2.
Fig. 10 is a diagram illustrating an example of the functional configuration of the failure diagnostic apparatus according to Embodiment 3.
Fig. 11 is a flowchart illustrating an example of the operation of the failure diagnostic apparatus according to Embodiment 3.
Fig. 12 is a diagram illustrating an example of a hardware configuration of the failure diagnostic apparatus according to Embodiment 1.

### Description of Embodiments

Embodiments will be described hereinafter with reference to the drawings. In the following description of the embodiments and the drawings, portions denoted by the same reference signs indicate the same or corresponding portions.

### Embodiment 1.

### *** Description of Configuration ***

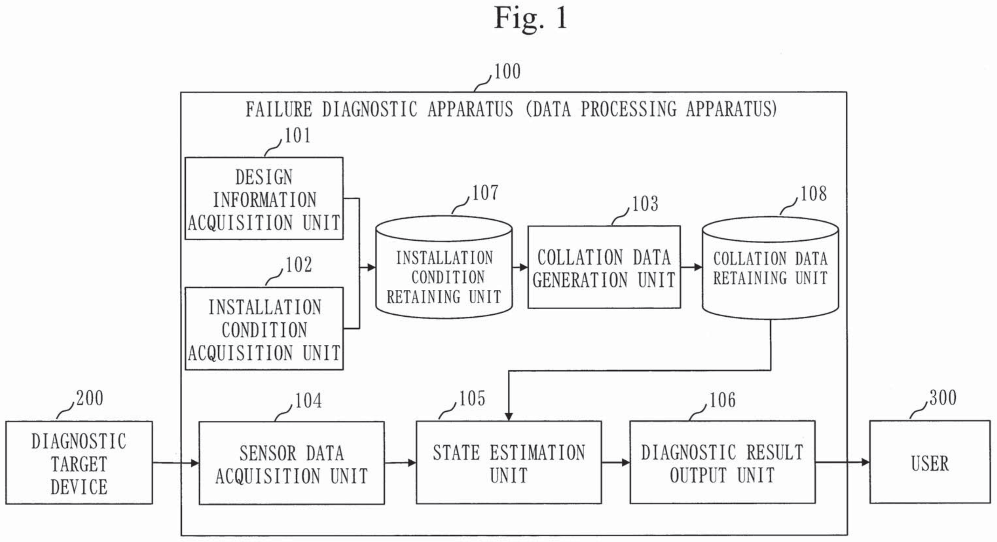

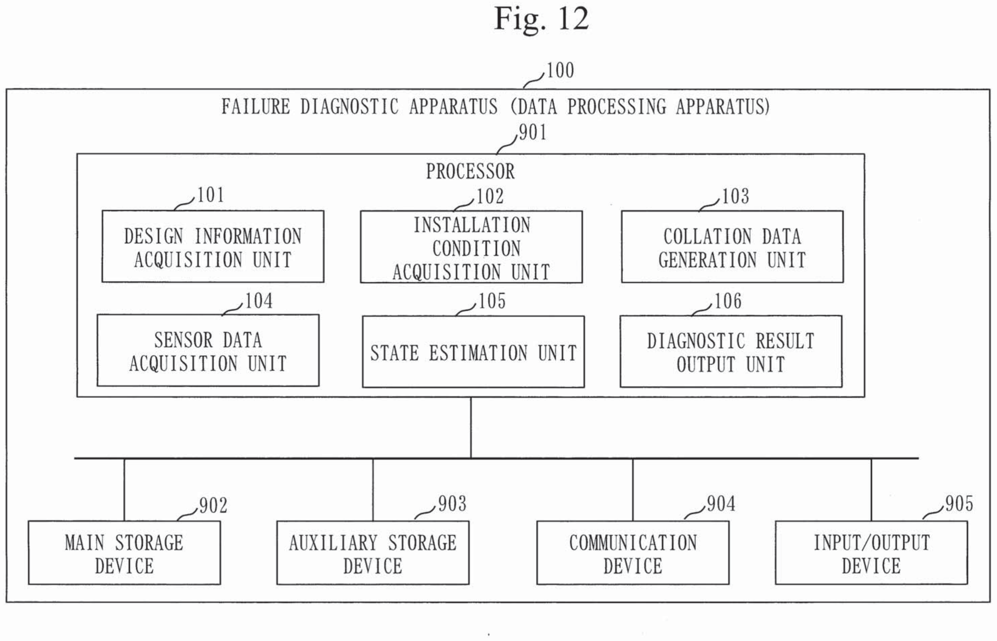

Fig. 1 illustrates an example of a functional configuration of a failure diagnostic apparatus 100 according to the present embodiment. Further, Fig. 12 illustrates an example of a hardware configuration of the failure diagnostic apparatus 100.

The failure diagnostic apparatus 100 is a computer.

Further, the failure diagnostic apparatus 100 is equivalent to a data processing apparatus. Further, an operation procedure of the failure diagnostic apparatus 100 is equivalent to a data processing method. Further, a program that implements operation of the failure diagnostic apparatus 100 is equivalent to a data processing program.

Before the details of the example of the functional configuration and the example of the hardware configuration of the failure diagnostic apparatus 100 are described, an overview of the operation of the failure diagnostic apparatus 100 will be described first.

The failure diagnostic apparatus 100 acquires design information and installation conditions of a device, and generates collation data in accordance with the design information and the installation conditions.

The collation data is data that is used to estimate a state of the device.

The collation data is data that simulates sensor data from a diagnostic target device 200 to be described below. The collation data includes normal simulation data and abnormal simulation data.

The normal simulation data is data that simulates the sensor data of the diagnostic target device 200 under normal situations. The abnormal simulation data is data that simulates the sensor data of the diagnostic target device 200 under abnormal situations. When it is not necessary to distinguish between the normal simulation data and the abnormal simulation data, both the normal data and the abnormal data are referred to as simulation data.

The design information is information obtained from a design drawing of the device. Specifically, the specifications of the device, which are decided at the time of designing the device, are described in the design information. These specifications of the device are, for example, the details of the configuration of the device, the details of the parts included in the device, the details of the functions of the device, and the like.

The installation conditions are conditions to be employed when the device is installed. The installation refers to the act of installing the device in a space (a building or the like) according to an installation drawing. The installation may involve an installation work.

The installation conditions are conditions that are obtained from the installation drawing, and need to be decided upon during the installation of the device. The installation conditions vary depending on an installation method of the device and the type of a space (a building or the like) in which the device is installed. A value that affects an operation state of the device is set in the installation conditions.

When an air conditioner is considered as an example of the device, the design information indicates a type of an outdoor unit and a type of an indoor unit, as the details of the configuration of the device.

Further, the design information indicates an external diameter, thickness, and the like of piping, as the details of the parts included in the device.

Furthermore, the design information indicates fan air volume of a heat exchanger, heat transfer correction coefficient, a range of movement of a solenoid valve, and the like, as the details of the functions of the device.

Also, when an air conditioner is considered as an example of the device, the installation conditions indicate height difference between an indoor heat exchanger and an outdoor heat exchanger, amount of refrigerant charged, the number of indoor units installed, length of piping, and the like.

In the present embodiment, to simplify the description, it is assumed that there is one piece of design information for one type of device. An example in which there are a plurality of pieces of design information for one type will be described below.

With regard to the installation conditions, it is assumed that there are a plurality of installation conditions for one type.

The failure diagnostic apparatus 100 generates the collation data for each installation condition. That is, the failure diagnostic apparatus 100 generates the normal simulation data and the abnormal simulation data as the collation data for each of the plurality of installation conditions.

The failure diagnostic apparatus 100 acquires the sensor data from the diagnostic target device 200. The failure diagnostic apparatus 100 is connected to the diagnostic target device 200 through the Internet or the like.

The diagnostic target device 200 is a device that has been installed in a space. The diagnostic target device 200 is the same type of device as the one from which the design information and the installation conditions have been acquired.

The sensor data is data collected by a sensor located in the diagnostic target device 200.

The failure diagnostic apparatus 100 collates the sensor data of the diagnostic target device 200 with a plurality of pieces of collation data (both the normal simulation data and the abnormal simulation data) for the plurality of installation conditions. The failure diagnostic apparatus 100 estimates a state (normal/abnormal) of the diagnostic target device 200 by determining the simulation data that is the most similar to the sensor data.

As described above, the failure diagnostic apparatus 100 generates the collation data for each installation condition. Thus, even if the diagnostic target device 200 has been installed according to one installation condition among the plurality of installation conditions, the failure diagnostic apparatus 100 can accurately estimate the state of the diagnostic target device 200 by collating the sensor data with the plurality of pieces of collation data.

Then, the failure diagnostic apparatus 100 presents to a user 300, the estimated state of the diagnostic target device 200, as a diagnostic result. The user 300 is, for example, a maintenance person of the diagnostic target device 200.

Next, the example of the hardware configuration of the failure diagnostic apparatus 100 will be described with reference to Fig. 12.

As illustrated in Fig. 12, the failure diagnostic apparatus 100 includes a processor 901, a main storage device 902, an auxiliary storage device 903, a communication device 904, and an input/output device 905, as pieces of hardware.

Functions of a design information acquisition unit 101, an installation condition acquisition unit 102, a collation data generation unit 103, a sensor data acquisition unit 104, a state estimation unit 105, and a diagnostic result output unit 106 illustrated in Fig. 1 are implemented by, for example, programs.

The auxiliary storage device 903 stores the programs that implement the functions of the design information acquisition unit 101, the installation condition acquisition unit 102, the collation data generation unit 103, the sensor data acquisition unit 104, the state estimation unit 105, and the diagnostic result output unit 106.

These programs are loaded from the auxiliary storage device 903 to the main storage device 902. Then, the processor 901 executes these programs, and performs operation of the design information acquisition unit 101, the installation condition acquisition unit 102, the collation data generation unit 103, the sensor data acquisition unit 104, the state estimation unit 105, and the diagnostic result output unit 106 to be described below.

Fig. 12 schematically illustrates a state in which the processor 901 executes the programs that implement the functions of the design information acquisition unit 101, the installation condition acquisition unit 102, the collation data generation unit 103, the sensor data acquisition unit 104, the state estimation unit 105, and the diagnostic result output unit 106.

The communication device 904 communicates with the diagnostic target device 200 via the Internet or the like.

The input/output device 905 is, for example, a keyboard, a mouse, a display, or the like. The input/output device 905 receives an instruction from the user 300. Further, the input/output device 905 presents various information to the user 300.

Next, the example of the functional configuration of the failure diagnostic apparatus 100 will be described with reference to Fig. 1.

The design information acquisition unit 101 acquires the design information. The design information acquisition unit 101 acquires the design information from, for example, a designer of the device. Further, the design information acquisition unit 101 may also acquire the design information from the device itself.

The design information acquisition unit 101 stores the acquired design information in an installation condition retaining unit 107.

The installation condition acquisition unit 102 acquires the plurality of installation conditions. The installation condition acquisition unit 102 acquires the installation conditions from, for example, the designer of the device.

The installation condition acquisition unit 102 stores the plurality of acquired installation conditions in the installation condition retaining unit 107.

The collation data generation unit 103 generates the collation data for each installation condition.

More specifically, the collation data generation unit 103 generates a physical model or a mathematical model (hereinafter simply referred to as a model) based on the design information and the installation conditions retained by the installation condition retaining unit 107. Then, the collation data generation unit 103 generates from the model, the collation data for each installation condition. As described above, the collation data includes the normal simulation data and the abnormal simulation data.

The collation data generation unit 103 generates the collation data before the sensor data acquisition unit 104 acquires sensor data from the diagnostic target device 200.

The collation data generation unit 103 stores the generated collation data in a collation data retaining unit 108.

A process performed by the collation data generation unit 103 is equivalent to a collation data generation process.

The sensor data acquisition unit 104 acquires the sensor data from the diagnostic target device 200. More specifically, the sensor data acquisition unit 104 acquires the sensor data via the communication device 904.

The sensor data acquisition unit 104 outputs the acquired sensor data to the state estimation unit 105.

A process performed by the sensor data acquisition unit 104 is equivalent to a sensor data acquisition process.

Once the state estimation unit 105 has acquired the sensor data from the sensor data acquisition unit 104, the state estimation unit 105 reads the collation data (the normal simulation data and the abnormal simulation data) for all the installation conditions from the collation data retaining unit 108.

Then, the state estimation unit 105 collates (compares) the sensor data with each simulation data. As a result of the collation, the state estimation unit 105 determines the simulation data that is the most similar to the sensor data.

Then, the state estimation unit 105 estimates the state of the diagnostic target device 200 based on the simulation data that is the most similar to the sensor data. That is, when the simulation data that is the most similar to the sensor data is the normal simulation data, the state estimation unit 105 estimates that the diagnostic target device 200 is normal. On the other hand, when the simulation data that is the most similar to the sensor data is the abnormal simulation data, the state estimation unit 105 estimates that the diagnostic target device 200 is abnormal.

Further, when the collation data generation unit 103 generates the abnormal simulation data for each abnormal cause, the state estimation unit 105 can estimate these abnormal causes.

The case is assumed in which the collation data generation unit 103 generates the abnormal simulation data corresponding to an abnormal cause α and the abnormal simulation data corresponding to an abnormal cause β, for example. In this case, when the simulation data that is the most similar to the sensor data is the abnormal simulation data corresponding to the abnormal cause α, the state estimation unit 105 can estimate that the diagnostic target device 200 is abnormal, and can further estimate that the abnormal cause is the abnormal cause α.

A process performed out by the state estimation unit 105 is equivalent to a state estimation process.

The diagnostic result output unit 106 presents to the user 300, the estimated state (normal/abnormal), which is the diagnostic result of the state estimation unit 105.

Further, when the state estimation unit 105 estimates an anomaly as the state of the diagnostic target device 200 and the state estimation unit 105 also estimates the cause of the anomaly, the diagnostic result output unit 106 may also present an estimated abnormal cause to the user 300.

Specifically, the diagnostic result output unit 106 displays the estimated state (and the estimated abnormal cause) on the input/output device 905 (a display). Further, the diagnostic result output unit 106 may also display a waveform of the sensor data, the collation data with the highest similarity, and the similarity between the sensor data and the collation data.

The installation condition retaining unit 107 retains the design information acquired by the design information acquisition unit 101 and the installation conditions acquired by the installation condition acquisition unit 102 in association with each other.

The collation data retaining unit 108 retains the collation data for each installation condition generated by the collation data generation unit 103.

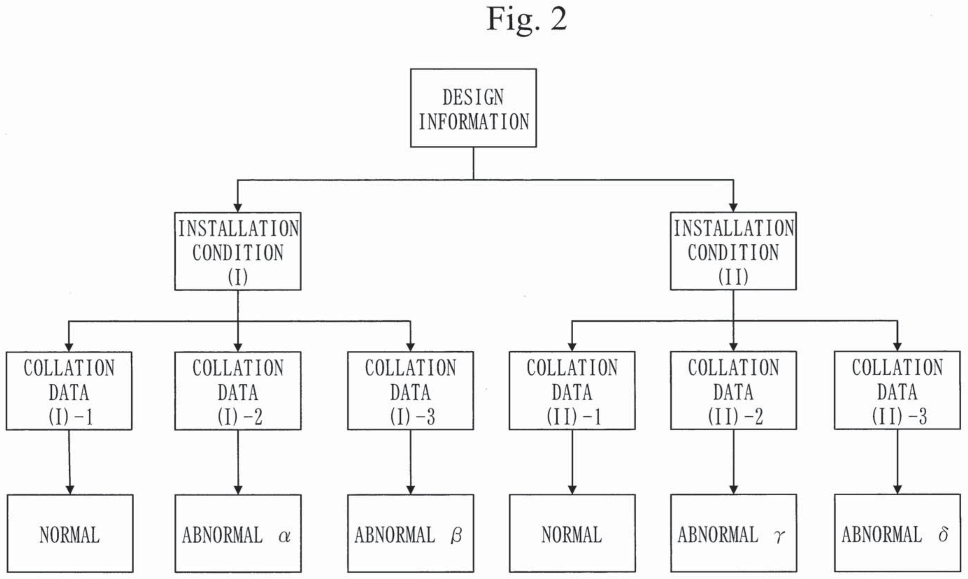

Fig. 2 illustrates an example of tree information according to the present embodiment.

The tree information in Fig. 2 represents the relation between the installation conditions, the collation data, and the state. Further, the tree information in Fig. 2 is stored in the collation data retaining unit 108. The state estimation unit 105 refers to the tree information in Fig. 2 to estimate the state of the diagnostic target device 200.

In the tree information in Fig. 2, the top level node is the "design information" node. The "installation condition" nodes are placed subordinate to the "design information" node. Further, the "collation data" nodes are placed subordinate to the "installation condition" nodes. Furthermore, the "state" nodes are placed subordinate to the "collation data" nodes. The "state" nodes indicate possible states that the device may become. Specifically, there are a "normal" node and an "abnormal" node in the "state" nodes.

"Abnormal α", "abnormal β", "abnormal γ", and "abnormal δ" represent possible types of anomalies that the device may become.

Fig. 2 illustrates the tree information that includes the "installation condition (I)" node and the "installation condition (II)" node. When there are other installation conditions ("installation condition (III)" and the like), nodes for the other installation conditions ("installation condition (III)" and the like) are also included in the tree information. Then, the "collation data" nodes and the "state" nodes are placed subordinate to the nodes for the other installation conditions.

"Collation data (I)-1" is connected to "state: normal". Thus, "collation data (I)-1" simulates the sensor data when the device is normal, and is the normal simulation data. On the other hand, "collation data (I)-2" is connected to "state: abnormal α". Thus, "collation data (I)-2" simulates the sensor data when the device is abnormal, and is the abnormal simulation data. "Collation data (1)-3" is connected to "state: abnormal β". Thus, "collation data (I)-3" simulates the sensor data when the device is abnormal, and is the abnormal simulation data.

Similarly, "collation data (II)-1" is connected to "state: normal". Thus, "collation data (II)-1" simulates the sensor data when the device is normal, and is the normal simulation data. On the other hand, "collation data (II)-2" is connected to "state: abnormal γ". Thus, "collation data (11)-2" simulates the sensor data when the device is abnormal, and is the abnormal simulation data. "Collation data (II)-3" is connected to "state: abnormal δ". Thus, "collation data (II)-3" simulates the sensor data when the device is abnormal, and is the abnormal simulation data.

The tree information illustrated in Fig. 2 is stored in the collation data retaining unit 108. The state estimation unit 105 refers to the tree information illustrated in Fig. 2 to estimate the state of the diagnostic target device 200.

When the collation data with the highest similarity to the sensor data is "collation data (I)-2", the state estimation unit 105 estimates "abnormal α" as the state of the diagnostic target device 200, for example.

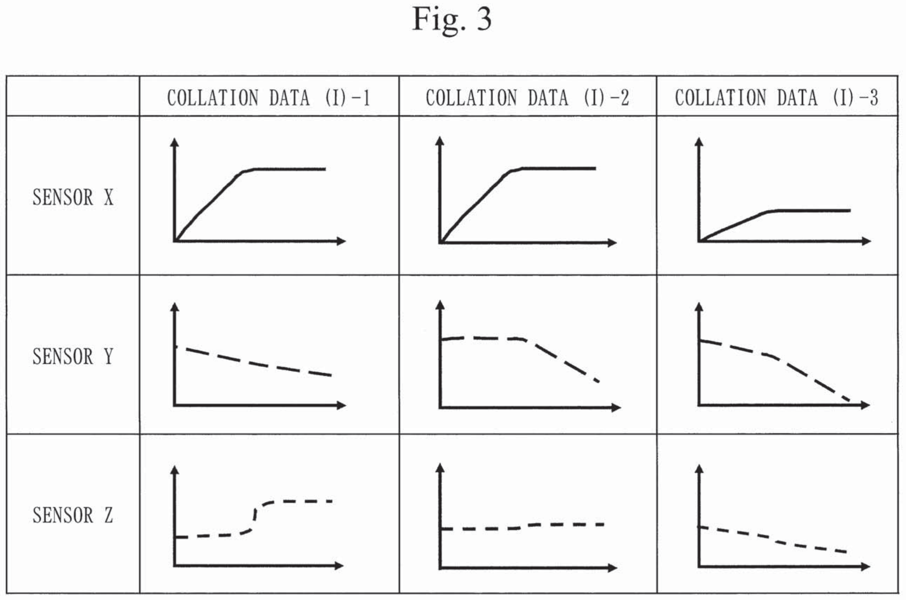

Fig. 3 illustrates an example of the collation data.

In the example of Fig. 3, each piece of collation data simulates the sensor data (time series data) from a sensor X, a sensor Y, and a sensor Z, which are placed in the device.

That is, "collation data (I)-1" simulates the sensor data of the sensor X, the sensor Y, and the sensor Z when the device is "normal".

"Collation data (I)-2" simulates the sensor data of the sensor X, the sensor Y, and the sensor Z when the device is "abnormal α".

"Collation data (I)-3" simulates the sensor data of the sensor X, the sensor Y, and the sensor Z when the device is "abnormal β".

The collation data in Fig. 3 simulates the sensor data of each sensor. Alternatively, the collation data may simulate synthetic data obtained by synthesizing a plurality of pieces of sensor data from a plurality of sensors.

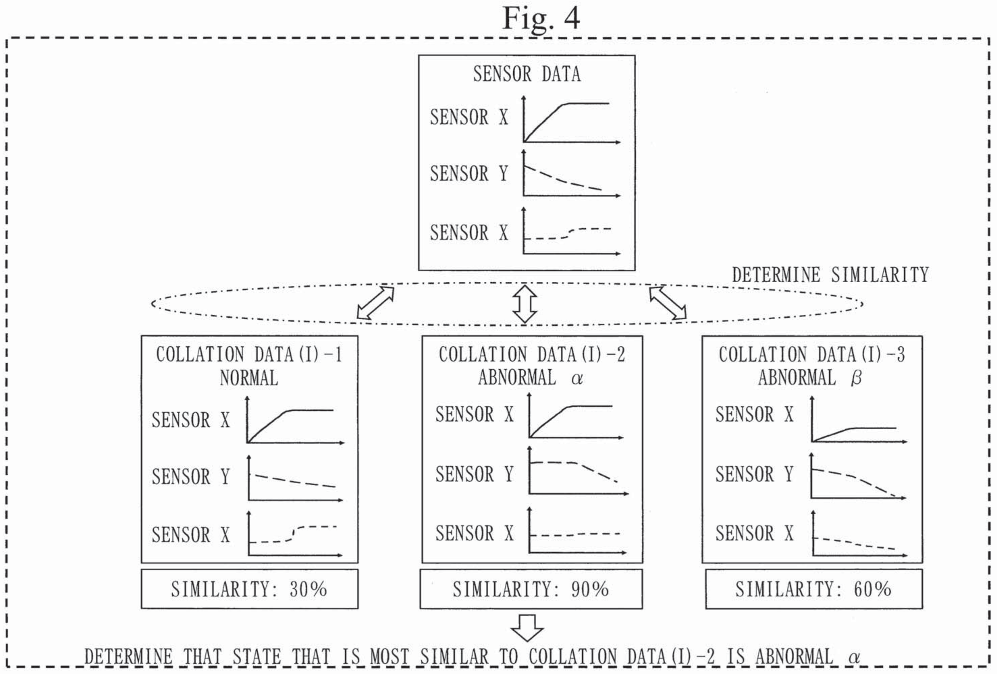

Fig. 4 illustrates an example of a collation process between the sensor data obtained from the diagnostic target device 200 and the collation data.

The state estimation unit 105 calculates the similarity of each piece of collation data to the sensor data. The state estimation unit 105 calculates the similarity using, for example. Euclidean distance, Manhattan distance, Dynamic Time Wraping (DTW), or the like.

Then, the state estimation unit 105 selects the collation data with the highest similarity. Further, the state estimation unit 105 refers to the tree information in Fig. 2 to specify the "state" node to be connected to the collation data with the highest similarity.

In the example of Fig. 4, the collation data with the highest similarity to the sensor data is "collation data (I)-2". In the tree information in Fig. 2, the "state" node to be connected to "collation data (1)-2" is "abnormal α".

Thus, the state estimation unit 105 estimates that the state of the diagnostic target device 200 is "abnormal α".

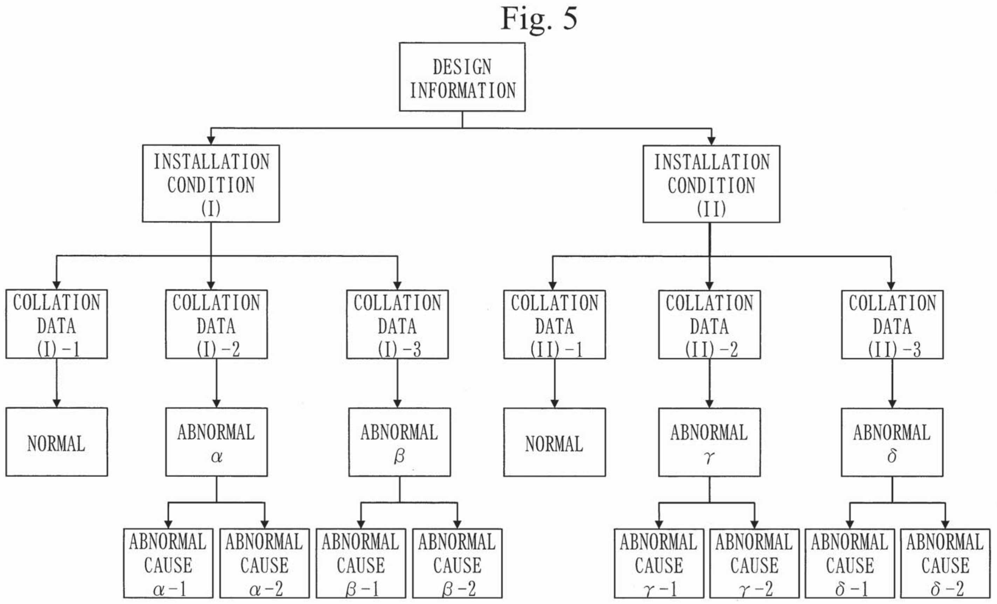

Instead of the tree information illustrated in Fig. 2, the tree information illustrated in Fig. 5 may also be used.

Fig. 5 illustrates an example of the tree information that has the "abnormal cause" nodes subordinate to the "abnormal" nodes.

In the example of Fig. 5, there are "abnormal cause α-1" and "abnormal cause α-2" subordinate to "abnormal α". Further, there are "abnormal cause β-1" and "abnormal cause β-2" subordinate to "abnormal β". Furthermore, there are "abnormal cause γ-1" and "abnormal cause γ-2" subordinate to "abnormal γ". Moreover, there are "abnormal cause δ-1" and "abnormal cause δ-2" subordinate to "abnormal δ".

When the tree information illustrated in Fig. 5 is used, the tree information illustrated in Fig. 5 is retained in the collation data retaining unit 108. The state estimation unit 105 refers to the tree information illustrated in Fig. 5 to estimate the state and the abnormal causes of the diagnostic target device 200.

When the collation data with the highest similarity to the sensor data is the collation data (I)-2 as in Fig. 4, the state estimation unit 105 estimates the state of the diagnostic target device 200 as "abnormal α", and further estimates "abnormal cause α-1" and "abnormal cause α-2" as the abnormal causes, for example.

### *** Description of Operation ***

Next, an example of the operation of the failure diagnostic apparatus 100 according to the present embodiment will be described.

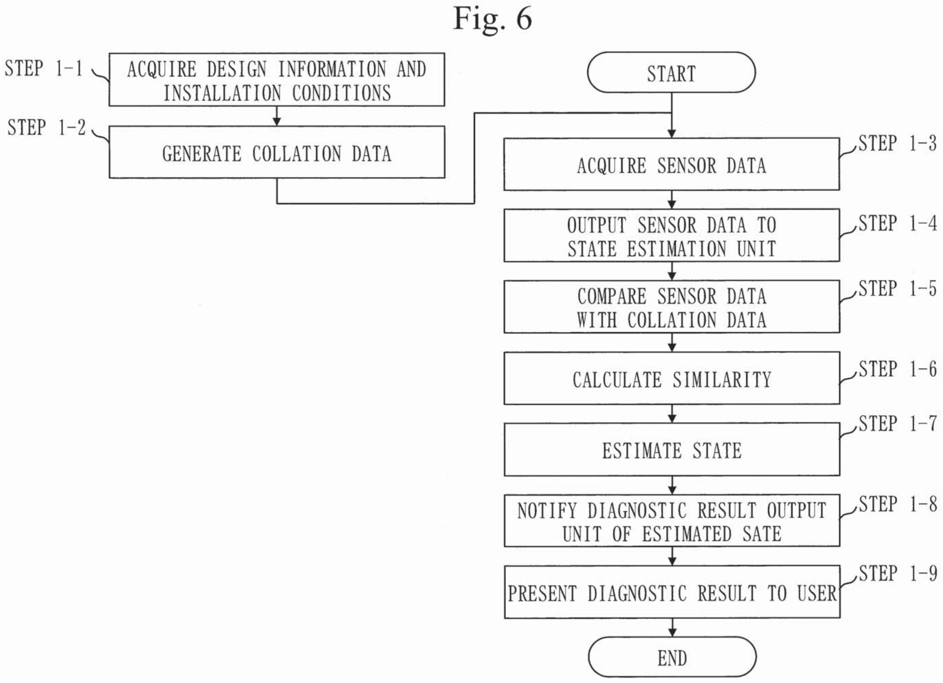

Fig. 6 is a flowchart illustrating the example of the operation of the failure diagnostic apparatus 100.

First, the design information acquisition unit 101 acquires the design information of the device, and the installation condition acquisition unit 102 acquires the installation conditions of the device (step 1-1). As described above, the design information acquisition unit 101 acquires one piece of design information, and the installation condition acquisition unit 102 acquires the plurality of installation conditions.

The design information acquisition unit 101 stores the acquired design information in the installation condition retaining unit 107. Further, the installation condition acquisition unit 102 stores the acquired installation conditions in the installation condition retaining unit 107.

Next, the collation data generation unit 103 generates the collation data for each installation condition (step 1-2).

Then, the collation data generation unit 103 stores the generated collation data in the collation data retaining unit 108.

Next, the sensor data acquisition unit 104 acquires the sensor data of the diagnostic target device 200 (step 1-3). Then, the sensor data acquisition unit 104 outputs the sensor data to the state estimation unit 105 (step 1-4).

Next, the state estimation unit 105 compares the sensor data with the collation data (step 1-5), and calculates the similarity (step 1-6).

Next, the state estimation unit 105 estimates the "state" corresponding to the collation data with the highest similarity in the tree information in Fig. 2, as the state of the diagnostic target device 200 (step 1-7).

If the collation data with the highest similarity is corresponded to "abnormal" in the tree information in Fig. 5 when the tree information in Fig. 5 is used, the state estimation unit 105 estimates "abnormal cause" corresponding to the "abnormal", as the cause of the anomaly.

Next, the state estimation unit 105 notifies the diagnostic result output unit 106 of the state of the diagnostic target device 200 estimated in step 1-7, as the diagnostic result (step 1-9). Further, when the state estimation unit 105 has also estimated the cause of the anomaly in step 1-7, the state estimation unit 105 notifies the diagnostic result output unit 106 of the estimated abnormal cause, as the diagnostic result.

Finally, the diagnostic result output unit 106 presents the diagnostic result of the state estimation unit 105 to the user 300 (step 1-9).

### *** Description of Effects of Embodiment ***

In such a manner, in the present embodiment, the collation data is generated for each installation condition in accordance with the plurality of installation conditions.

Thus, according to the present embodiment, it is possible to accurately estimate the state of the device, regardless of the installation conditions under which the device has been installed, without causing the redundant processing such as generating the model for each installation condition.

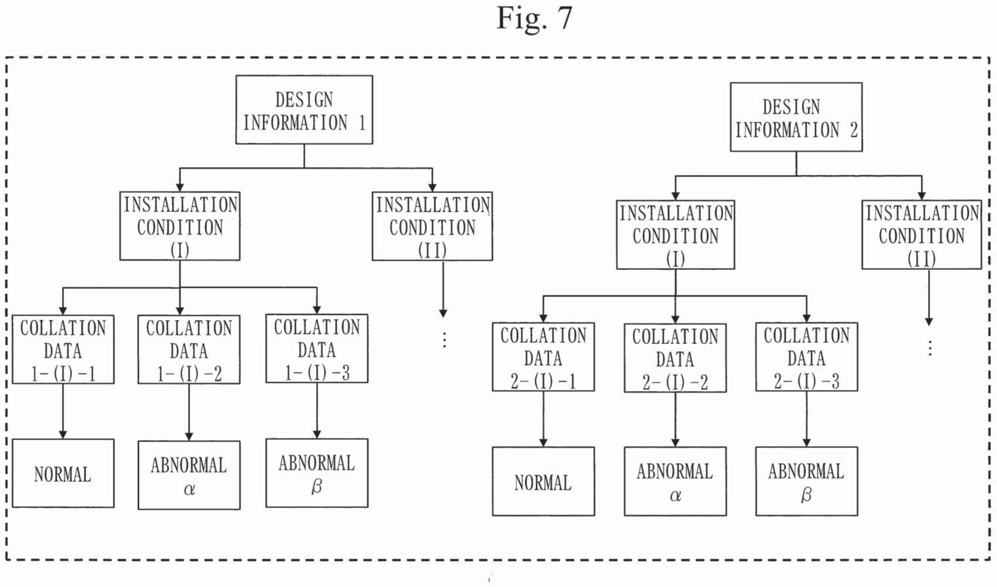

As described above, in the present embodiment, it is premised that there is only one piece of design information. When there are two or more pieces of design information for a single type, the tree information exemplified in Fig. 7 is used.

In the tree information in Fig. 7, there are the "design information 1" node and the "design information 2" node, as the "design information" nodes. Further, there are the "installation condition (I)" node and the "installation condition (II)" node, as the "installation condition" nodes.

In the example of Fig. 7, "installation condition (I)" and "installation condition (II)" are placed subordinate to the "design information 1" node. "Collation data 1-(1)-1", "collation data 1-(1)-2" and "collation data 1-(1)-3" are placed subordinate to "installation condition (I)". "Normal" is placed subordinate to "collation data 1-(I)-1". "Abnormal α" is placed subordinate to "collation data 1-(1)-2". "Abnormal β" is placed subordinate to "collation data 1-(I)-3". Further, although the illustration has been omitted, "collation data 1-(II)-1", "collation data 1-(11)-2" and "collation data 1-(II)-3" are placed subordinate to "installation condition (II)". "Normal" is placed subordinate to "collation data 1-(II)-1". "Abnormal α" is placed subordinate to "collation data 1-(II)-2". "Abnormal β" is placed subordinate to "collation data 1-(II)-3".

Further, the "installation condition (I)" and "installation condition (II)" nodes are placed subordinate to the "design information 2" node. "Collation data 2-(1)-1", "collation data 2-(I)-2" and "collation data 2-(I)-3" are placed subordinate to "installation condition (I)". "Normal" is placed subordinate to "collation data 2-(I)-1". "Abnormal α" is placed subordinate to "collation data 2-(1)-2". "Abnormal P" is placed subordinate to "collation data 2-(I)-3". Further, although the illustration has been omitted, "collation data 2-(II)-1", "collation data 2-(11)-2", and "collation data 2-(11)-3" are placed subordinate to "installation condition (II)". "Normal" is placed subordinate to "collation data 2-(II)-1". "Abnormal α" is placed subordinate to "collation data 2-(II)-2". "Abnormal β" is placed subordinate to "collation data 2-(II)-3".

When the tree information illustrated in Fig. 7 is used, the tree information illustrated in Fig. 7 is retained by the collation data retaining unit 108. The state estimation unit 105 refers to the tree information illustrated in Fig. 7 to estimate the state of the diagnostic target device 200.

Further, the tree information in Fig. 5 and the tree information in Fig. 7 may be combined. That is, there may be "abnormal cause" nodes as in Fig. 5 subordinate to the "abnormal" nodes in the tree information in Fig. 7.

### Embodiment 2.

In the failure diagnostic apparatus 100 according to Embodiment 1, when the installation conditions cannot be obtained, the collation data cannot be generated. Thus, it is not possible to diagnose the state of the diagnostic target device 200.

Further, in the failure diagnostic apparatus 100 according to Embodiment 1, when only some of the installation conditions can be obtained, there will be a lack of collation data. Thus, there is a possibility that diagnostic accuracy cannot be sufficiently ensured.

The failure diagnostic apparatus 100 according to the present embodiment generates an installation condition that is assumed when the device is installed, as an assumed installation condition. Then, the failure diagnostic apparatus 100 can solve the above described problems by generating the collation data in accordance with the plurality of installation conditions that include the assumed installation condition.

In the present embodiment, the differences from Embodiment 1 will be mainly described.

The matters not described below are the same as those in Embodiment 1.

### *** Description of Configuration ***

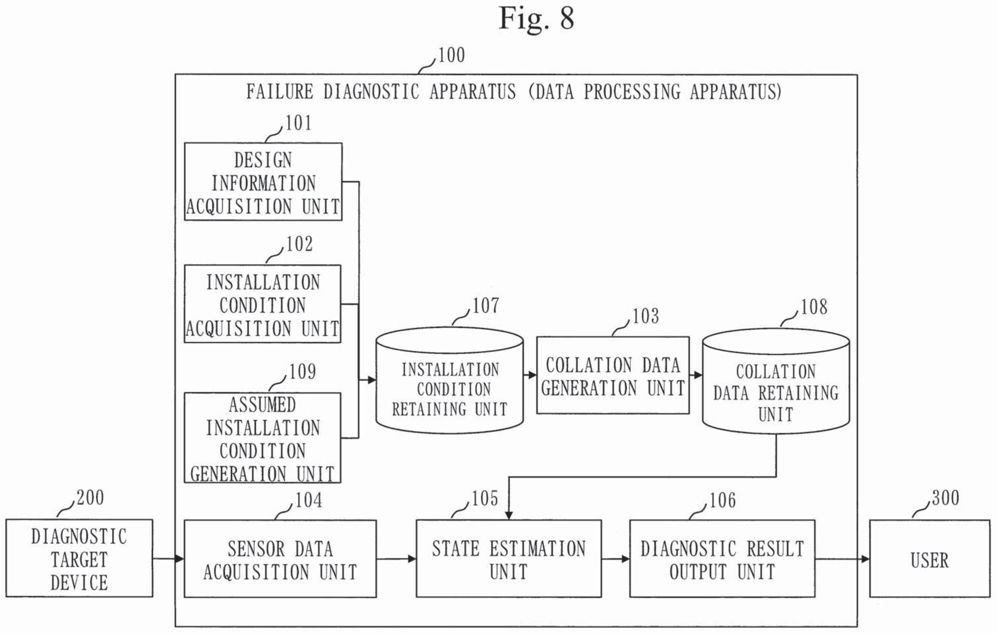

Fig. 8 illustrates an example of the functional configuration of the failure diagnostic apparatus 100 according to the present embodiment.

Compared to Fig. 1, an assumed installation condition generation unit 109 is added in Fig. 8.

The assumed installation condition generation unit 109 generates a condition that is assumed when the device is installed, as the assumed installation condition.

When the installation condition acquisition unit 102 cannot acquire the installation conditions or when the installation condition acquisition unit 102 can acquire only some of the installation conditions, the assumed installation condition generation unit 109 generates the assumed installation condition to compensate for the lack of installation conditions.

The assumed installation condition generation unit 109 generates the installation condition that is assumed when the device is installed based on the design information. Then, the assumed installation condition generation unit 109 stores the generated assumed installation condition in the installation condition retaining unit 107.

When the installation condition acquisition unit 102 can acquire even a little of the installation conditions, the assumed installation condition generation unit 109 may use the installation conditions that has been acquired by the installation condition acquisition unit 102 to generate the assumed installation condition.

A function of the assumed installation condition generation unit 109 is implemented by a program as with the design information acquisition unit 101 and the like. Then, the processor 901 executes the program that implements the function of the assumed installation condition generation unit 109.

In the present embodiment, the installation condition retaining unit 107 retains the plurality of installation conditions that include the assumed installation condition generated by the assumed installation condition generation unit 109.

That is, when the installation condition acquisition unit 102 can acquire even a little of the installation conditions, the installation condition retaining unit 107 retains the installation conditions acquired by the installation condition acquisition unit 102 and the assumed installation condition generated by the assumed installation condition generation unit 109.

Further, in the present embodiment, the collation data generation unit 103 generates the collation data for the plurality of installation conditions that includes the assumed installation condition generated by the assumed installation condition generation unit 109.

In the generation of the collation data, the collation data generation unit 103 does not need to distinguish between the installation conditions acquired by the installation condition acquisition unit 102 and the assumed installation condition generated by the assumed installation condition generation unit 109.

The tree information used in the present embodiment is the tree information illustrated in one of Fig. 2, 5, and 7. Further, the tree information used in the present embodiment may be the tree information obtained by synthesizing the tree information in Fig. 5 and the tree information in Fig. 7.

However, in the present embodiment, at least one of the installation conditions included in the tree information is the assumed installation condition generated by the assumed installation condition generation unit 109.

That is, when the tree information in Fig. 2 is taken as an example, at least one of "installation condition (I)" and "installation condition (II)" is the assumed installation condition.

### *** Description of Operation ***

Next, an example of the operation of the failure diagnostic apparatus 100 according to the present embodiment will be described.

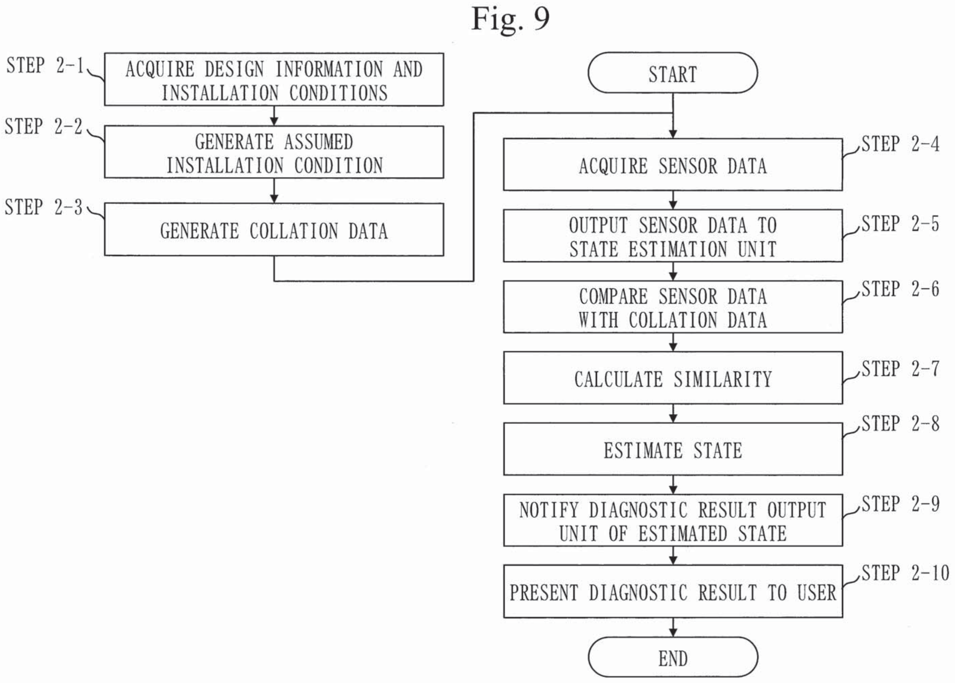

Fig. 9 is a flowchart illustrating the example of the operation of the failure diagnostic apparatus 100 according to the present embodiment.

First, the design information acquisition unit 101 acquires the design information of the device, and the installation condition acquisition unit 102 acquires the installation conditions of the device (step 2-1). In the present embodiment, there may be a case where the installation condition acquisition unit 102 cannot acquire some or any of the installation conditions. The installation condition acquisition unit 102 notifies the assumed installation condition generation unit 109 that some or any of the installation conditions cannot be acquired.

Next, the assumed installation condition generation unit 109 generates the assumed installation condition (step 2-2).

Next, the collation data generation unit 103 generates the collation data (step 2-3). As described above, the collation data generation unit 103 generates the collation data for each installation condition of the plurality of installation conditions that include the assumed installation condition generated by the assumed installation condition generation unit 109.

The processes from step 2-4 onwards are the same as the processes from step 1-3 onwards in Fig. 6. Thus, the description of these processes is omitted.

### *** Description of Effects of Embodiment ***

In the present embodiment, the assumed installation condition is generated, and the collation data is generated using the assumed installation condition. Thus, according to the present embodiment, even if some or any of the installation conditions cannot be acquired, it is possible to accurately estimate the state of the device based on the collation data generated using the assumed installation condition, regardless of the installation conditions under which the device has been installed.

### Embodiment 3.

In Embodiments 1 and 2, the collation data that is corresponded to all of the installation conditions is prepared in advance. Thus, in the configurations of Embodiments 1 and 2, the memory resource is strained by a large number of pieces of collation data.

Further, in Embodiments 1 and 2, the sensor data is collated with all pieces of collation data, when the sensor data is acquired. Thus, in the configurations of Embodiments 1 and 2, the operation resource is strained by collating the sensor data with the large number of pieces of collation data.

In the present embodiment, the failure diagnostic apparatus 100 retains basis collation data that serves as a basis for the generation of the collation data. Further, the failure diagnostic apparatus 100 retains a generation rule for each installation condition, which is used to generate the collation data for each of the installation conditions from the basis collation data.

When acquiring the sensor data from the diagnostic target device 200, the failure diagnostic apparatus 100 analyzes the sensor data and selects one installation condition from among the plurality of installation conditions, as a selected installation condition. Next, the failure diagnostic apparatus 100 applies the generation rule corresponding to the selected installation condition to the basis collation data to generate a collation rule for the selected installation condition. Then, the failure diagnostic apparatus 100 collates the generated collation rule with the sensor data to estimate the state of the diagnostic target device 200.

The failure diagnostic apparatus 100 according to the present embodiment can operate in such a manner, so as to solve the above described problems.

In the present embodiment, the differences from Embodiment 2 will be mainly described.

Further, the matters not described below are the same as those in Embodiment 2.

### *** Description of Configuration ***

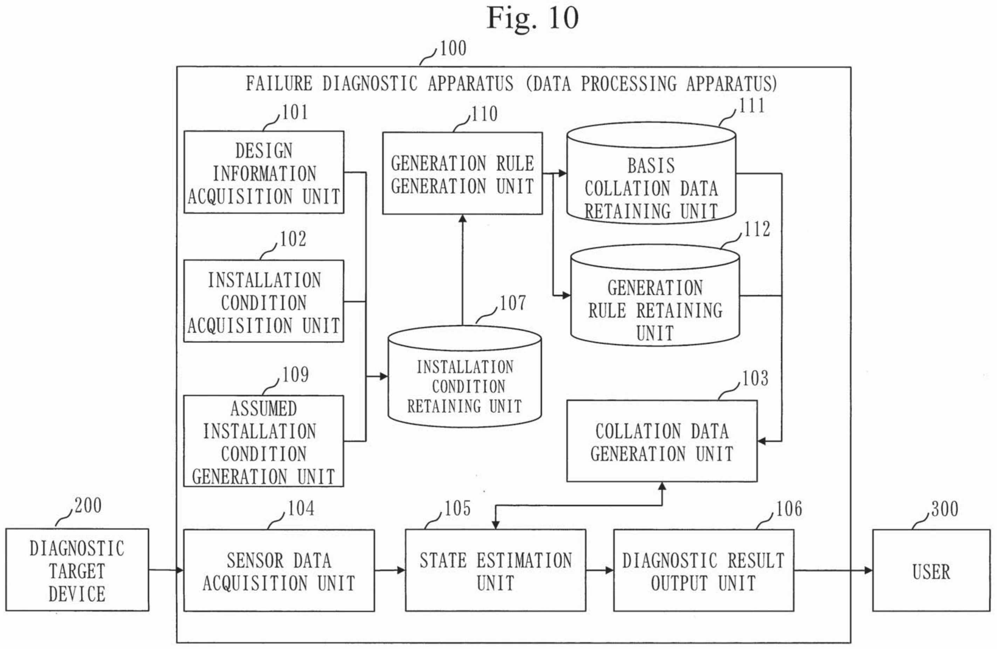

Fig. 10 illustrates an example of the functional configuration of the failure diagnostic apparatus 100 according to the present embodiment.

Compared to Fig. 8, a generation rule generation unit 110, a basis collation data retaining unit 111, and a generation rule retaining unit 112 are added to Fig. 10. Further, the collation data retaining unit 108 is removed.

The generation rule generation unit 110 generates the basis collation data and the generation rule for each installation condition.

The basis collation data is, as described above, data that serves as a basis for the generation of the collation data.

The generation rule generation unit 110 generates the basis collation data through the following procedures.

First, the generation rule generation unit 110 specifies one installation condition from among the plurality of installation conditions, as a specified installation condition.

Further, the generation rule generation unit 110 specifies one state from among a plurality of states of the specified installation condition, as a specified state.

The generation rule generation unit 110 specifies "installation condition (I)" among "installation condition (I)" and "installation condition (II)" illustrated in Fig. 2, as the specified installation condition, for example. Further, the generation rule generation unit 110 specifies "normal" among "normal", "abnormal α", and "abnormal β" of "installation condition (I)" illustrated in Fig. 2, as the specified state, for example.

Then, the generation rule generation unit 110 generates the collation data for the specified state of the specified installation condition, as the basis collation data.

When the generation rule generation unit 110 specifies "installation condition (I)" as the specified installation condition and specifies "normal" as the specifies state, the generation rule generation unit 110 generates the simulation data for "collation data (I)-1" corresponding to "installation condition (I)" and "normal", as the basis collation data. That is, the generation rule generation unit 110 generates data that simulates each piece of sensor data of the sensor X, the sensor Y, and the sensor Z of "collation data (1)-1" illustrated in Fig. 3, as the basis collation data.

The generation rule for each installation condition is a rule for generating the collation data for each installation condition from the basis collation data.

In the present embodiment, the generation rule is composed of an installation condition relation formula and a state relation formula.

The installation condition relation formula is a conversion formula for generating from the basis collation data, the collation data corresponding to the same state as the specified state of the basis collation data, regarding the installation condition that is subject to generating the generation rule.

Further, the state relation formula is a conversion formula for generating from the collation data generated using the installation condition relation formula, the collation data corresponding to a state that differs from the specified state.

The generation rule generation unit 110 generates the installation condition relation formula and the state relation formula for each installation condition other than the specified installation condition.

A case is assumed in which the generation rule generation unit 110 generates the generation rule of "installation condition (II)" illustrated in Fig. 2.

Here, as described above, it is assumed that the generation rule generation unit 110 specifies "installation condition (I)" as the specified installation condition and specifies "normal" as the specified state. That is, it is assumed that the generation rule generation unit 110 generates data that simulates each piece of sensor data of the sensor X, the sensor Y, and the sensor Z of "collation data (I)-1" illustrated in Fig. 3, as the basis collation data.

The generation rule generation unit 110 generates a conversion formula for generating the collation data corresponding to "installation condition (II)" and "normal" from the basis collation data, as the installation condition relation formula.

Further, the generation rule generation unit 110 generates a conversion formula for generating the collation data corresponding to "installation condition (II)" and "abnormal γ" from the collation data corresponding to "installation condition (II)" and "normal", as the state relation formula for "abnormal γ".

Furthermore, the generation rule generation unit 110 generates a conversion formula for generating the collation data corresponding to "installation condition (II)" and "abnormal δ" from the collation data corresponding to "installation condition (II)" and "normal", as the state relation formula for "abnormal δ".

As also for "installation condition (I)", the generation rule generation unit 110 generates a conversion formula for generating the collation data corresponding to "installation condition (I)" and "abnormal α" from the basis collation data, as the state relation formula for "abnormal α".

Further, the generation rule generation unit 110 generates a conversion formula for generating the collation data corresponding to "installation condition (I)" and "abnormal β" from the basis collation data, as the state relation formula for "abnormal β".

The generation rule generation unit 110 stores the generated basis collation data in the basis collation data retaining unit 111.

Further, the generation rule generation unit 110 stores the generated generation rule (the installation condition relation formula and the state relation formula) for each installation condition in the generation rule retaining unit 112.

The basis collation data retaining unit 111 retains the basis collation rule.

The generation rule retaining unit 112 retains the generation rule for each installation condition.

In the present embodiment, upon acquiring the sensor data from the sensor data acquisition unit 104, the state estimation unit 105 outputs the sensor data to the collation data generation unit 103.

The collation data generation unit 103 acquires the basis collation data from the basis collation data retaining unit 111.

Next, the collation data generation unit 103 compares the sensor data with the basis collation data, and determines application of which generation rule (installation condition relation formula, state relation formula) of installation condition needs to be applied to the basis collation data to acquire the collation data that is the most similar to the sensor data.

Then, the collation data generation unit 103 selects the installation condition under which the collation data that is the most similar to the sensor data can be acquired. Here, the installation condition selected by the collation data generation unit 103 is referred to as the selected installation condition.

The collation data generation unit 103 acquires the generation rule for the selected installation condition from the generation rule retaining unit 112.

Then, the collation data generation unit 103 applies the generation rule for the selected installation condition to the basis collation data to generate the collation data for the selected installation condition.

Specifically, the collation data generation unit 103 applies the installation condition relation formula for the selected installation condition to the basis collation data to generate the collation data corresponding to the selected installation condition and the same state as and specified state.

Further, the collation data generation unit 103 applies the state relation formula for selected installation condition to the generated collation data to generate the collation data corresponding to the selected installation condition and a state that differs from the specified state.

When "installation condition (II)" illustrated in Fig. 2 is the selected installation condition, the collation data generation unit 103 applies the installation condition relation formula for "installation condition (II)" to the basis collation data to generate the collation data (collation data (II)-1) corresponding to "installation condition (II)" and "normal", for example.

Further, the collation data generation unit 103 applies the state relation formula for "abnormal γ" of the selected installation condition to the generated "collation data (II)-1" to generate the collation data (collation data (11)-2) corresponding to "installation condition (II)" and "abnormal γ".

Furthermore, the collation data generation unit 103 applies the state relation formula for "abnormal δ" of the selected installation condition to the generated "collation data (II)-1" to generate the collation data (collation data (II)-3) corresponding to "installation condition (II)" and "abnormal δ".

Then, the collation data generation unit 103 outputs the collation data for the selected installation condition to the state estimation unit 105.

When the collation data generation unit 103 selects "installation condition (I)" illustrated in Fig. 2 as the selected installation condition, the collation data generation unit 103 applies the state relation formula for "abnormal α" of "installation condition (I)" to the basis collation data to generate the collation data (collation data (1)-2) corresponding to "installation condition (I)" and "abnormal α".

Similarly, the collation data generation unit 103 applies the state relation formula for "abnormal β" of "installation condition (I)" to the basis collation data to generate the collation data (collation data (I)-3) corresponding to "installation condition (I)" and "abnormal β".

The state estimation unit 105 acquires the collation data for the selected installation condition from the collation data generation unit 103, collates (compares) the sensor data with the collation rule for the selected installation condition, and estimates the state (and the abnormal cause) of the diagnostic target device 200.

### *** Description of Operation ***

Next, an example of the operation of the failure diagnostic apparatus 100 according to the present embodiment will be described.

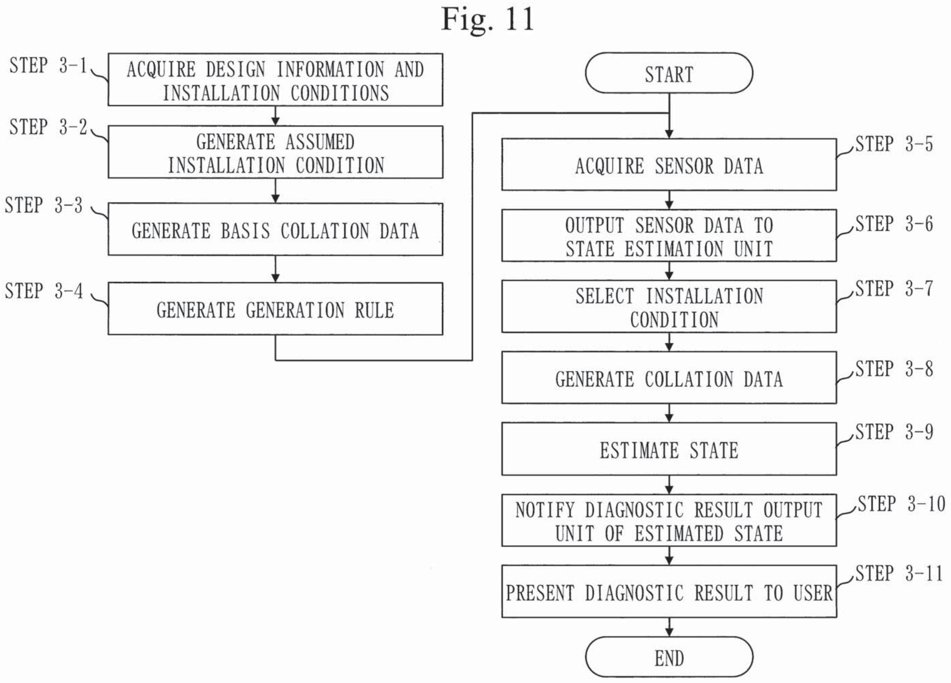

Fig. 11 is a flowchart illustrating the example of the operation of the failure diagnostic apparatus 100 according to the present embodiment.

Step 3-1 is the same as step 2-1 in Fig. 9. Further, step 3-2 is the same as step 2-2 in Fig. 9.

Thus, the description of steps 3-1 and 3-2 will be omitted.

Next, the generation rule generation unit 110 generates the basis collation data (step 3-3).

As described above, the generation rule generation unit 110 specifies the specified installation condition and the specified state. Then, the generation rule generation unit 110 generates the collation data corresponding to the specified state of the specified installation condition, as the basis collation data.

Next, the generation rule generation unit 110 generates the generation rule for each installation condition (step 3-4).

As described above, the generation rule generation unit 110 generates, for each installation condition, the installation condition relation formula and the state relation formula, as the generation rule.

Step 3-5 is the same as step 2-4 in Fig. 9. Further, step 3-6 is the same as step 2-5 in Fig. 9.

Thus, the description of steps 3-5 and 3-6 will be omitted.

After step 3-6, the state estimation unit 105 outputs the sensor data to the collation data generation unit 103. Then, the collation data generation unit 103 compares the sensor data with the basis collation data, and selects the installation requirement (step 3-7). As described above, the collation data generation unit 103 selects the installation condition under which the collation data that is the most similar to the sensor data can be acquired. The installation condition selected by the collation data generation unit 103 is the selected installation condition.

The collation data generation unit 103 obtains the generation rule for the selected installation condition.

Next, the collation data generation unit 103 applies the generation rule for the selected installation condition to the basis collation data to generate the collation data (step 3-8).

Then, the collation data generation unit 103 outputs the generated collation data to the state estimation unit 105.

Next, the state estimation unit 105 compares the collation data acquired from the collation data generation unit 103 and the sensor data, and estimates the state of the diagnostic target device 200 (step 3-9).

That is, the state estimation unit 105 estimates the state corresponding to the simulation data that is the most similar to the sensor data, among the normal simulation data and the abnormal simulation data included in the collation data acquired from the collation data generation unit 103, as the state of the diagnostic target device 200.

Step 3-10 in Fig. 9 is the same as step 2-9. Further, step 3-11 in Fig. 9 is the same as step 2-10.

Thus, the description of steps 3-10 and 3-11 will be omitted.

### *** Description of Effects of Embodiment ***

In the present embodiment, the failure diagnostic apparatus 100 only needs to retain the basis collation data and the generation rule, and unlike Embodiments 1 and 2, does not need to retain the large number of pieces of collation data.

Further, in the present embodiment, when acquiring the sensor data, the failure diagnostic apparatus 100 selects the generation rule, and applies the selected generation rule to the basis collation data to generate the collation data. Then, the failure diagnostic apparatus 100 only needs to collate the sensor data with the generated collation data. Therefore, there is no need to collate the sensor data with the large number of pieces of collation data, unlike Embodiments 1 and 2.

Therefore, according to the present embodiment, it is possible to avoid the situation in which the memory resource is strained by retaining the large number of pieces of collation data, unlike Embodiments 1 and 2.

Further, according to the present embodiment, it is possible to avoid the situation in which the operation resource is strained by collating the sensor data with the large number of pieces of collation data, unlike Embodiments 1 and 2.

Embodiments 1 to 3 have been described above and two or more of these embodiments may be implemented in combination.

Alternatively, one of these embodiments may be implemented partially.

Alternatively, two or more of these embodiments may be implemented partially in combination.

Further, the configurations and procedures described in these embodiments may be modified as necessary.

### ***Supplementary Description of Hardware Configuration***

Finally, a supplementary description of the hardware configuration of the failure diagnostic apparatus 100 will be given.

The processor 901 illustrated in Fig. 12 is an Integrated Circuit (IC) that performs processing.

The processor 901 is a Central Processing Unit (CPU), a Digital Signal Processor (DSP), or the like.

The main storage device 902 illustrated in Fig. 12 is a Random Access Memory (RAM).

The auxiliary storage device 903 illustrated in Fig. 12 is a Read Only Memory (ROM), a flash memory, a Hard Disk Drive (HDD), or the like.

The communication device 904 illustrated in Fig. 12 is an electronic circuit that executes a communication process for data.

The communication device 904 is, for example, a communication chip or a Network Interface Card (NIC).

Further, the auxiliary storage device 903 also stores an Operating System (OS).

Then, at least a part of the OS is executed by the processor 901.

While executing at least the part of the OS, the processor 901 executes programs that implement the functions of the design information acquisition unit 101 and the like.

By the processor 901 executing the OS, task management, memory management, file management, communication control, and the like are performed.

Further, at least one of information, data, a signal value, and a variable value that indicate results of processes of the design information acquisition unit 101 and the like is stored in at least one of the main storage device 902, the auxiliary storage device 903, and a register and a cache memory in the processor 901.

Further, the programs that implement the functions of the design information acquisition unit 101 and the like may be stored in a portable recording medium such as a magnetic disk, a flexible disk, an optical disc, a compact disc, a Blu-ray (registered trademark) disc, or a DVD. Then, the portable recording medium storing the programs that implement the functions of the design information acquisition unit 101 and the like may be distributed.

Further, the "unit" of at least one of the design information acquisition unit 101 and the like may be read as a "circuit", "step", "procedure", "process", or "circuitry".

Further, the failure diagnostic apparatus 100 may be implemented by a processing circuit. The processing circuit is, for example, a logic Integrated Circuit (IC), a Gate Array (GA), an Application Specific Integrated Circuit (ASIC), or a Field-Programmable Gate Array (FPGA).

In this case, each of the design information acquisition unit 101 and the like is implemented as a part of the processing circuit.

In the present description, a superordinate concept of the processor and the processing circuit is referred to as "processing circuitry".

That is, each of the processor and the processing circuit is a specific example of the "processing circuitry".

### Reference Signs List

100: failure diagnostic apparatus; 101: design information acquisition unit; 102: installation condition acquisition unit; 103: collation data generation unit; 104: sensor data acquisition unit; 105: state estimation unit; 106: diagnostic result output unit; 107: installation condition retaining unit; 108: collation data retaining unit; 109: assumed installation condition generation unit; 110: generation rule generation unit; 111: basis collation data retaining unit; 112: generation rule retaining unit; 200: diagnostic target device; 300: user; 901: processor; 902: main storage device; 903: auxiliary storage device; 904: communication device; 905: input/output device.

## Claims

1. A data processing apparatus comprising:
a collation data generation unit to generate collation data to be used for estimating a state of a device in accordance with an installation condition which is a condition to be employed when the device is installed;
a sensor data acquisition unit to acquire sensor data of a diagnostic target device which is an installed device; and
a state estimation unit to collate the sensor data with the collation data, and estimate a state of the diagnostic target device.

2. The data processing apparatus according to claim 1, wherein
the collation data generation unit generates a plurality of pieces of collation data in accordance with a plurality of installation conditions before the sensor data acquisition unit acquires the sensor data.

3. The data processing apparatus according to claim 1, wherein
the collation data generation unit generates a plurality of pieces of collation data, each of which is associated with the state of the device and a cause of the state, and
the state estimation unit collates the sensor data and the plurality of pieces of collation data, and estimates the state of the diagnostic target device and the cause of the state.

4. The data processing apparatus according to claim 1 further comprising
an assumed installation condition generation unit to generate a condition that is assumed when the device is installed, as an assumed installation condition, wherein
the collocation data generation unit generates a plurality of pieces of collation data in accordance with a plurality of installation conditions that include the assumed installation condition.

5. The data processing apparatus according to claim 1, wherein
the collation data generation unit, after the sensor data acquisition unit acquires the sensor data, analyzes the sensor data, selects one installation condition from among a plurality of installation conditions, and generates the collation data in accordance with a selected installation condition which is the installation condition that is selected.

6. The data processing apparatus according to claim 5 further comprising:
a basis collation data retaining unit to retain basis collation data that serves as a basis for generation of the collation data by the collation data generation unit; and
a generation rule retaining unit to retain a generation rule for generating the collation data from the basis collation data, for each installation condition, wherein
the collation data generation unit applies the generation rule for the selected installation condition to the basis collation data to generate the collation data.

7. The data processing apparatus according to claim 6, wherein
the basis collation data retaining unit retains collation data corresponding to a specified installation condition which is an installation condition specified from among the plurality of installation conditions, and a specified state which is a state specified from among a plurality of possible states that the device may become, as the basis collation data,
the generation rule retaining unit retains as the generation rule, for each installation condition other than the specified installation condition among the plurality of installation conditions, an installation condition relation formula for generating from the basis collation data, collation data corresponding to the same state as the specified state, and a state relation formula for generating from the collation data generated using the installation condition relation formula, collation data corresponding to a state that differs from the specified state, and
the collation data generation unit applies the installation condition relation formula for the selected installation condition to the basis collation data to generate collation data corresponding to the selected installation condition and the same state as the specified state, and applies the state relation formula for the selected installation condition to the generated collation data to generate collation data corresponding to the selected installation condition and a state that differs from the specified state.

8. A data processing method comprising:
by a computer, generating a plurality of pieces of collation data to be used for estimating a state of a device in accordance with installation conditions which are conditions to be employed when the device is installed;
by the computer, acquiring sensor data of a diagnostic target device which is an installed device; and
by the computer, collating the sensor data with the plurality of pieces of collation data, and estimating a state of the diagnostic target device.

9. A data processing program for causing a computer to executes:
a collation data generation process to generate a plurality of pieces of collation data to be used for estimating a state of a device in accordance with installation conditions which are conditions to be employed when the device is installed;
a sensor data acquisition process to acquire sensor data of a diagnostic target device which is an installed device; and
a state estimation process to collate the sensor data with the plurality of pieces of collation data, and estimate a state of the diagnostic target device.
